# EUROPÄISCHE PATENTSCHRIFT

(11) **EP 3 146 085 B1**
(45) Veröffentlichungstag und Bekanntmachung des Hinweises auf die Patenterteilung: **26.06.2019**
(21) Anmeldenummer: 15711094.1
(22) Anmeldetag: 11.03.2015
(51) Int. Cl.: C23C 4/08, C23C 4/131, F16C 1/00

(54) **GLEITANORDNUNG UND VERFAHREN ZUM HERSTELLEN DER GLEITANORDNUNG FÜR EINE ZYLINDERLAUFBAHN**
SLIDING ASSEMBLY AND METHOD OF PRODUCING THE SLIDING ASSEMBLY FOR A CYLINDER LINING
ENSEMBLE COULISSANT ET PROCÉDÉ DE MANUFACTURE DE L'ENSEMBLE COULISSANT POUR UNE CHEMISE DE CYLINDRE

(30) Priorität: 20.05.2014 DE 102014209522
(43) Veröffentlichungstag der Anmeldung: 29.03.2017
(73) Patentinhaber: Bayerische Motoren Werke Aktiengesellschaft, 80809 München (DE)
(72) Erfinder: SCHLEIF, Beate, 80995 München (DE); WAGENER, Wolfram, 84144 Geisenhausen (DE)
(86) Internationale Anmeldenummer: PCT/EP2015/054997
(87) Internationale Veröffentlichungsnummer: WO 2015/176837

(56) Entgegenhaltungen:
- DE-A1- 19 956 622
- JP-A- H0 625 821
- JP-A- S5 696 066
- Anonymous: "Motorguss an der Grenze des Materials - ingenieur.de", INGENIEUR.de - Technik - Karriere - News, 23 March 2001 (2001-03-23), pages 1-4, XP055529227, Retrieved from the Internet: URL:https://www.ingenieur.de/technik/fachb ereiche/werkstoffe/motorguss-an-grenze-mat erials/ [retrieved on 2018-12-03]

## Beschreibung

Die Erfindung betrifft eine Gleitanordnung und ein Verfahren zum Herstellen der Gleitanordnung, für eine Zylinderlaufbahn in einer Brennkraftmaschine. Ferner betrifft die Erfindung die Brennkraftmaschine mit der Gleitanordnung.

Der Stand der Technik kennt thermisch gespritzte Gleitflächen, beispielsweise Zylinderlaufbahnen in Aluminiumkurbelgehäusen. Für die Serienproduktion werden bevorzugt Beschichtungen auf Eisenbasis aufgebracht. Zur Optimierung der Eigenschaften, speziell Reibung, Verschleiß und Notlaufeigenschaften, können verschiedene Legierungselemente oder Partikel gezielt in die Schicht eingebracht werden.

Die DE 199 56 622 A1 offenbart ein Verfahren und eine Vorrichtung zur Herstellung von mit wenigstens einer Gleitfläche versehenen Maschinenteilen, wie Zylinderbüchsen von Zweitakt-Großdieselmotoren, durch thermisches Spritzen einer Beschichtung aus einer AluminiumBronze mit einem weiteren, hiermit nicht legierten Material.

Es ist Aufgabe vorliegender Erfindung eine Gleitanordnung und ein Verfahren zum Herstellen der Gleitanordnung für eine Zylinderlaufbahn in einer Brennkraftmaschine anzugeben, die bei kostengünstiger Herstellung eine dauerfeste Gleitfläche ermöglichen, wobei insbesondere verschiedene Eigenschaften wie niedrige Reibung, niedriger Verschleiß und gute Notlaufeigenschaften der Gleitfläche erfüllt seien sollen. Ferner ist es Aufgabe der Erfindung eine entsprechende Brennkraftmaschine mit der Gleitanordnung anzugeben.

Die Lösung der Aufgabe erfolgt durch die Merkmale der unabhängigen Ansprüche. Die Unteransprüche haben vorteilhafte Ausgestaltungen der Erfindung zum Gegenstand.

Somit wird die Aufgabe gelöst durch eine Gleitanordnung umfassend einen Grundkörper, ausgebildet als Kurbelgehäuse einer Brennkraftmaschine und aus einem Aluminiumwerkstoff, und eine durch thermisches Spritzen auf den Grundkörper aufgebrachte Beschichtung als Gleitfläche, ausgebildet als Zylinderlaufbahn, wobei die Gleitfläche eine erste Phase aus einem ersten Werkstoff und eine zweite Phase aus einem zweiten Werkstoff umfasst, wobei der erste Werkstoff vom zweiten Werkstoff unterschiedlich ist, wobei der erste Werkstoff zumindest 50 Massenprozent Eisen (Fe) umfasst, und wobei der zweite Werkstoff zumindest 50 Massenprozent Kupfer (Cu) umfasst.

Die erste Phase der Gleitfläche besteht somit aus einer Legierung auf Eisenbasis, insbesondere wird ein un- oder niedriglegierter Stahl verwendet. Die zweite Phase besteht aus einem Kupfer-basierten Werkstoff, insbesondere Aluminiumbronze. In der Gleitfläche sind die beiden Ausgangswerkstoffe nicht vollständig zusammenlegiert, sondern die beiden Werkstoffe finden sich zumindest teilweise als separate Phasen wieder. Insbesondere wird von dem ersten Werkstoff mehr verwendet als von dem zweiten Werkstoff, sodass der erste Werkstoff, insbesondere Stahl, die Matrix bildet, wobei in dieser Matrix die zweite Phase bestehend aus dem zweiten Werkstoff, insbesondere Bronze, eingelagert ist. Der Stahl hat den Vorteil, dass er bei hoher Festigkeit und guter Wärmeleitfähigkeit einen sehr geringen Verschleiß aufweist. Mittels des ersten Werkstoffes beziehungsweise der ersten Phase in der Gleitfläche kann somit eine große Last bei guter Verschleißfestigkeit getragen werden. Die zweite Phase, im Wesentlichen bestehend aus Kupfer, dient zur Reduzierung der Reibung der Gleitfläche.

Vorteilhafterweise wird als zweiter Werkstoff Bronze mit zumindest 70 Massenprozent Kupfer (Cu) und zumindest einem weiteren Legierungselement, darunter Aluminium (Al), verwendet.

Erfindungsgemäß liegt ein Verhältnis des ersten Werkstoffs zum zweiten Werkstoff, insbesondere im Ausgangsmaterial, zwischen 60:40 und 95:5 (erster Werkstoff: zweiter Werkstoff). Dadurch entsteht eine erste Phase, eisenhaltig, zur Ausbildung der Matrix. In dieser ersten Phase ist die zweite Phase, kupferhaltig, eingelagert.

Die Erfindung umfasst ferner ein Verfahren zum Herstellen der soeben beschriebene Gleitanordnung. Das Verfahren wird an Zylinderlaufbahnen in einer Brennkraftmaschine angewandt. Das Verfahren umfasst zumindest die folgenden Schritte: (i) Bereitstellen eines Grundkörpers in Form eines Kurbelgehäuses der Brennkraftmaschine. Der Grundkörper besteht aus einem Aluminiumwerkstoff, vorzugsweise aus einer Aluminiumlegierung. (ii) Und thermisches Spritzen einer Beschichtung auf den Grundkörper. Diese thermisch aufgespritzte Beschichtung stellt, vorzugsweise nach einem geeigneten mechanischen Verfahren, insbesondere Honen, die Gleitfläche dar. Vor dem Beschichten erfolgt vorzugsweis eine Aktivierung der zu beschichtenden Oberfläche. Beim thermischen Spritzen werden zumindest zwei unterschiedliche Werkstoffe verwendet. Dabei erfolgt ein gleichzeitiges thermisches Spritzen dieser beiden Werkstoffe. Die beiden Werkstoffe können auch als Spritzwerkstoffe bezeichnet werden. Die beiden Werkstoffe werden dem Spritzvorgang beispielsweise als zwei Drähte oder als ein ummantelter Draht zugeführt. Allerdings können die zumindest zwei Werkstoffe beim Zuführen zum thermischen Spritzvorgang sogar miteinander legiert sein, wobei dann die Temperatur zum Spritzen entsprechend gewählt wird, sodass die Legierung nur teilweise aufgeschmolzen wird und in der Beschichtung die zwei Phasen entstehen.

Durch das gleichzeitige thermische Spritzen der beiden Werkstoffe entsteht die Gleitfläche aus zwei Phasen, wobei die erste Phase eine Legierung auf Eisenbasis, insbesondere ein un- oder niedriglegierter Stahl, und die zweite Phase aus einem Kupfer-basierten Werkstoff, insbesondere Aluminiumbronze, besteht. Durch den thermischen Spritzvorgang werden die beiden Ausgangswerkstoffe nicht vollständig zusammenlegiert, bzw. wenn die Werkstoffe vor dem thermischen Spritzen in einer Legierung vorliegen, wird diese Legierung beim thermischen Spritzen zumindest teilweise aufgelöst. In beiden Fällen finden sich die beiden Werkstoffe zumindest teilweise als separate Phasen in der Beschichtung bzw. Gleitfläche wieder. Es wird von dem ersten Werkstoff mehr verwendet als von dem zweiten Werkstoff, sodass der erste Werkstoff, insbesondere Stahl, die Matrix bildet, wobei in dieser Matrix die zweite Phase bestehend aus dem zweiten Werkstoff, insbesondere Bronze, eingelagert ist. Durch diese erfindungsgemäße Herstellung der Beschichtung können sehr unterschiedliche Eigenschaften der Gleitfläche, je nach Wahl der Werkstoffe, realisiert werden. Im Rahmen des erfindungsgemäßen Verfahrens sind die selben Materialen und Massenverhältnisse der Werkstoffe wie bei der erfindungsgemäßen Gleitfläche vorgesehen.

Als thermischer Spritzvorgang wird vorteilhafterweise Plasmaspritzen, Hochgeschwindigkeitsflammspritzen, Lichtbogendrahtspritzen oder Kaltgasspritzen verwendet.

Beim Plasmaspritzen und beim Kaltgasspritzen wird üblicherweise ein Pulver verwendet. In dem hier beschriebenen Verfahren werden entsprechend zwei unterschiedliche Pulver aus den unterschiedlichen Werkstoffen gleichzeitig dem Plasmaspritzvorgang zugeführt.

Beim Hochgeschwindigkeitsflammspritzen kann entweder Pulver oder ein Draht verwendet werden. Bei Verwendung des Pulvers werden wiederum zwei unterschiedliche Pulver aus den unterschiedlichen Werkstoffen verwendet.

Beim Lichtbogendrahtspritzen werden Drähte, insbesondere zwei, drei oder vier Drähte, eingesetzt. Dementsprechend werden die beiden Werkstoffe hier in Form eines Drahtes zugeführt.

Sowohl beim Lichtbogendrahtspritzen als auch beim Hochgeschwindigkeitsflammspritzen gibt es für die Anwendung der Drähte zwei unterschiedliche bevorzugte Varianten: Zum einen kann ein erster Draht aus dem ersten Werkstoff und gleichzeitig ein zweiter Draht aus dem zweiten Werkstoff zugeführt werden. Darüber hinaus ist bevorzugt vorgesehen, dass ein einzelner Draht verwendet wird, wobei die Seele des Drahtes aus dem zweiten Werkstoff besteht und eine Ummantelung der Seele des Drahtes aus dem ersten Werkstoff besteht. Dadurch ist es möglich, die beiden Werkstoffe in Form nur eines Drahtes gleichzeitig dem thermischen Spritzvorgang zuzuführen.

Versuche mit den unterschiedlichen Verfahren für das thermische Spritzen haben gezeigt, dass bei Einstellung geeigneter Prozessparameter sich die beiden Werkstoffe beim thermischen Spritzen nicht vollständig durchlegieren, sondern zumindest teilweise als zwei unterschiedliche Phasen in der Beschichtung vorliegen. Dies ist beispielsweise in Schliffbildern gut zu erkennen.

Die Erfindung umfasst ferner eine Brennkraftmaschine mit der beschriebenen Gleitfläche als Zylinderlaufbahn. Ferner ist vorgesehen, die erfindungsgemäße Brennkraftmaschine mit der beschriebenen Gleitfläche nach dem oben beschriebenen Verfahren herzustellen.

Mittels der Erfindung können die hohe Verschleißfestigkeit des ersten Werkstoffes und die geringe Reibung des zweiten Werkstoffes gleichzeitig in einer Gleitfläche zum Einsatz gebracht werden. Dadurch reduziert sich trotz Verschleißfestigkeit die Reibung in der Brennkraftmaschine, wodurch sich der Kraftstoffverbrauch und die CO₂-Emission verringern. Weitere Einzelheiten, Merkmale und Vorteile der Erfindung ergeben sich aus der nachfolgenden Beschreibung und den Figuren. Es zeigen:
- Figur 1: eine schematische Ansicht der erfindungsgemäßen Gleitanordnung und des erfindungsgemäßen Verfahrens gemäß einem Ausführungsbeispiel, und
- Figur 2: einen Draht, der im erfindungsgemäßen Verfahren gemäß dem Ausführungsbeispiel verwendet werden kann.

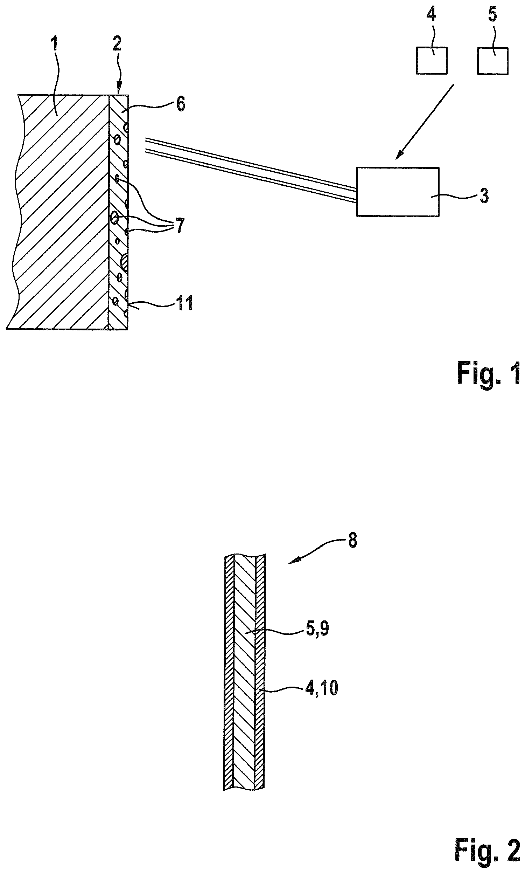

Anhand der Figuren 1 und 2 wird eine Gleitanordnung mit einer Gleitfläche 11 und ein Verfahren zum Herstellen der Gleitanordnung 11 beschrieben.

Figur 1 zeigt schematisch stark vereinfacht einen Ausschnitt eines Grundkörpers 1, hier ausgebildet als Aluminiumkurbelgehäuse. Auf den Grundkörper 1 wird durch thermisches Spritzen eine Beschichtung 2 aufgebracht. Die Außenfläche der Beschichtung 2 bildet, nach mechanischer Bearbeitung, die Gleitfläche 11, die als Zylinderlaufbahn verwendet wird.

Für den thermischen Spritzvorgang wird eine thermische Spritzvorrichtung 3 verwendet. Die thermische Spritzvorrichtung 3 ist insbesondere eine Vorrichtung zum Plasmaspritzen, Hochgeschwindigkeitsflammspritzen oder Lichtbogendrahtspritzen oder Kaltgasspritzen.

Der thermischen Spritzvorrichtung 3 werden gleichzeitig ein erster Werkstoff 4 und ein zweiter Werkstoff 5 zugeführt. Der erste Werkstoff 4 besteht im Wesentlichen aus Stahl oder Eisen. Der zweite Werkstoff 5 umfasst einen erheblichen Anteil an Kupfer.

Durch den thermischen Spritzvorgang werden die beiden Werkstoffe 4, 5 gleichzeitig auf den Grundkörper 1 aufgetragen, sodass die Beschichtung 2 entsteht.

Wie die schematische Darstellung in Figur 1 zeigt, entsteht aus dem ersten Werkstoff 4 eine erste Phase 6. Aus dem zweiten Werkstoff 5 entsteht eine zweite Phase 7, die in der ersten Phase 6 eingelagert ist.

Insbesondere zum Lichtbogendrahtspritzen oder zum Hochgeschwindigkeitsflammspritzen kann ein Draht 8 gemäß Figur 2 verwendet werden. Der Draht 8 weist eine Seele 9 aus dem zweiten Werkstoff 5 auf. Die Seele 9 ist von einer Ummantelung 10 aus dem ersten Werkstoff 4 umgeben. Mittels des dargestellten Drahtes 8 können die beiden Werkstoffe 4, 5 gleichzeitig der thermischen Spritzvorrichtung 3 zugeführt werden.

### Bezugszeichenliste:

- 1: Grundkörper
- 2: Beschichtung
- 3: thermische Spritzvorrichtung
- 4: erster Werkstoff (Stahl)
- 5: zweiter Werkstoff (Bronze)
- 6: erste Phase (Matrix)
- 7: zweite Phase (Einlagerung)
- 8: Draht
- 9: Seele
- 10: Ummantelung
- 11: Gleitfläche

## Patentansprüche

1. Gleitanordnung umfassend
• einen Grundkörper (1), ausgebildet als Kurbelgehäuse einer Brennkraftmaschine, aus einem Aluminiumwerkstoff, und
• eine durch thermisches Spritzen auf den Grundkörper (1) aufgebrachte Beschichtung (2) als Gleitfläche (11), ausgebildet als Zylinderlaufbahn, wobei die
Gleitfläche (11) eine erste Phase (6) aus einem ersten Werkstoff (4) und eine zweite Phase (7) aus einem zweiten Werkstoff (5) umfasst, wobei der erste Werkstoff (4) vom zweiten Werkstoff (5) unterschiedlich ist, wobei der erste Werkstoff (4) zumindest 50 Massenprozent Eisen (Fe) umfasst, und wobei der zweite Werkstoff (5) zumindest 50 Massenprozent Kupfer (Cu) umfasst, und
• wobei ein Verhältnis des ersten Werkstoffs (4) zum zweiten Werkstoff (5) zwischen 60:40 und 95:5 (erster Werkstoff: zweiter Werkstoff) liegt.

2. Gleitanordnung nach Anspruch 1, **dadurch gekennzeichnet, dass** der erste Werkstoff (4) zumindest 70 Massenprozent Eisen (Fe) umfasst.

3. Gleitanordnung nach einem der vorhergehenden Ansprüche, **dadurch gekennzeichnet, dass** der zweite Werkstoff (5) zumindest 70 Massenprozent Kupfer (Cu) umfasst.

4. Gleitanordnung nach Anspruch 3, **dadurch gekennzeichnet, dass** der zweite Werkstoff Bronze mit zumindest 70 Massenprozent Kupfer (Cu) und zumindest einem weiteren Legierungselement, darunter Aluminium (Al), ist.

5. Brennkraftmaschine mit einer Gleitanordnung nach einem der vorhergehenden Ansprüche.

6. Verfahren zum Herstellen einer Gleitanordnung, ausgebildet als Zylinderlaufbahn in einer Brennkraftmaschine, umfassend die folgenden Schritte:
- Bereitstellen eines Grundkörpers (1) aus Aluminiumwerkstoff, ausgebildet als Kurbelgehäuse, und
- thermisches Spritzen einer Beschichtung (2) auf den Grundkörper (1) zur Herstellung der Gleitfläche (11), wobei ein erster Werkstoff (4) und ein vom ersten unterschiedlicher zweiter Werkstoff (5) gleichzeitig in einem thermischen Spritzvorgang aufgetragen werden, sodass die Gleitfläche (11) eine erste Phase (6) aus dem ersten Werkstoff (4) und eine zweite Phase (7) aus dem zweiten Werkstoff (5) aufweist, wobei der erste Werkstoff (4) zumindest 50 Massenprozent, vorzugsweise zumindest 70 Massenprozent, Eisen (Fe) umfasst, und wobei der zweite Werkstoff (5) zumindest 50 Massenprozent, vorzugsweise zumindest 70 Massenprozent, Kupfer (Cu) umfasst, und wobei ein Verhältnis des ersten Werkstoffs (4) zum zweiten Werkstoff (5) zwischen 60:40 und 95:5 (erster Werkstoff: zweiter Werkstoff) liegt.

7. Verfahren nach Anspruch 6, **dadurch gekennzeichnet, dass** als thermischer Spritzvorgang Lichtbogendrahtspritzen verwendet wird, wobei die beiden Werkstoffe (4, 5) als Draht gleichzeitig zugeführt werden.

8. Verfahren nach Anspruch 7, **dadurch gekennzeichnet, dass** ein Draht (8) verwendet wird, dessen Seele (9) aus dem zweiten Werkstoff (5) besteht und dessen Ummantelung (10) der Seele (9) aus dem ersten Werkstoff (4) besteht.

9. Brennkraftmaschine mit einer Gleitanordnung, wobei die Gleitanordnung nach einem der Ansprüche 6 bis 8 hergestellt ist.

## Claims

1. A sliding arrangement comprising
• a basic body (1), formed as the crankcase of an internal combustion engine, made of an aluminium material, and
• a coating (2), applied to the basic body (1) by thermal spraying, as a sliding face (11), formed as a cylinder barrel, wherein the sliding face (11) comprises a first phase (6) made of a first material (4) and a second phase (7) made of a second material (5), wherein the first material (4) is different from the second material (5), wherein the first material (4) comprises at least 50 mass percent iron (Fe), and wherein the second material (5) comprises at least 50 mass percent copper (Cu), and
• wherein a ratio of the first material (4) to the second material (5) is between 60 : 40 and 95 : 5 (first material : second material).

2. A sliding arrangement according to Claim 1, **characterised in that** the first material (4) comprises at least 70 mass percent iron (Fe).

3. A sliding arrangement according to one of the preceding claims, **characterised in that** the second material (5) comprises at least 70 mass percent copper (Cu).

4. A sliding arrangement according to Claim 3, **characterised in that** the second material is bronze with at least 70 mass percent copper (Cu) and at least one further alloying element, including aluminium (Al).

5. An internal combustion engine with a sliding arrangement according to one of the preceding claims.

6. A method for producing a sliding arrangement, formed as a cylinder barrel in an internal combustion engine, comprising the following steps:
- providing a basic body (1) made of aluminium material, formed as a crankcase, and
- thermally spraying a coating (2) onto the basic body (1) to produce the sliding face (11), wherein a first material (4) and a second material (5) different from the first material are applied simultaneously in a thermal spraying operation, so that the sliding face (11) has a first phase (6) made of the first material (4) and a second phase (7) made of the second material (5), wherein the first material (4) comprises at least 50 mass percent, preferably at least 70 mass percent, iron (Fe), and wherein the second material (5) comprises at least 50 mass percent, preferably at least 70 mass percent, copper (Cu), and wherein a ratio of the first material (4) to the second material (5) is between 60 : 40 and 95 : 5 (first material : second material).

7. A method according to Claim 6, **characterised in that** arc wire spraying is used as the thermal spraying operation, the two materials (4, 5) being supplied simultaneously as wire.

8. A method according to Claim 7, **characterised in that** a wire (8) is used, the core (9) of which consists of the second material (5) and the covering (10) of the core (9) of which consists of the first material (4).

9. An internal combustion engine with a sliding arrangement, wherein the sliding arrangement is produced according to one of Claims 6 to 8.

## Revendications

1. Dispositif de glissement comprenant :
- un corps de base (1) réalisé sous la forme du carter de vilebrequin d'un moteur à combustion interne en un matériau à base d'aluminium, et
- un revêtement (2) appliqué par pulvérisation thermique sur le corps de base (1) sous la forme d'une surface de glissement (11), réalisée en tant que course de cylindre, dans lequel :
la surface de glissement (11) comporte une première phase (6) en un premier matériau (4) et une seconde phase en un second matériau (5), le premier matériau (4) étant différent du second matériau (5), le premier matériau (4) renfermant au moins 50 % en masse de fer (Fe) et le second matériau (5) renfermant au moins 50 % en masse de cuivre (Cu),
- le rapport entre premier matériau (4) et le second matériau (5) étant compris entre 60:40 et 95:5 (premier matériau : second matériau).

2. Dispositif de glissement conforme à la revendication 1,
**caractérisé en ce que**
le premier matériau (4) renferme au moins 70 % en masse de fer (Fe).

3. Dispositif de glissement conforme à l'une des revendications précédentes,
**caractérisé en ce que**
le second matériau (5) renferme au moins 70 % en masse de fer (Cu).

4. Dispositif de glissement conforme à la revendication 3,
**caractérisé en ce que**
le second matériau est du bronze renfermant au moins 70 % en masse de cuivre (Cu) et au moins un autre élément d'alliage dont l'aluminium (Al).

5. Moteur à combustion interne comprenant un dispositif de glissement conforme à l'une des revendications précédentes.

6. Procédé d'obtention d'un dispositif de glissement réalisé sous la forme d'une course de glissement de cylindre dans un moteur à combustion interne comprenant les étapes suivantes consistant à :
- se procurer un corps de base (1) en un matériau à base d'aluminium réalisé sous la forme d'un carter de vilebrequin, et
- effectuer la pulvérisation thermique d'un revêtement (2) sur le corps de base (1) de façon à obtenir la surface de glissement (11), un premier matériau (4) et un second matériau (5) différent du premier matériau étant appliqués simultanément par un processus de pulvérisation thermique de sorte que la surface de glissement (11) renferme une première phase (6) dans le premier matériau (4) et une seconde phase (7) dans le second matériau (5), le premier matériau (4) renfermant au moins 50 % en masse, de préférence au moins 70 % en masse de fer (Fe) et le second matériau (5) renfermant au moins 50 % en masse, de préférence au moins 70 % en masse de cuivre (Cu), et le rapport entre le premier matériau (4) et le second matériau (5) étant compris entre 60:40 et 95:5 (premier matériau : second matériau).

7. Procédé conforme à la revendication 6,
**caractérisé en ce qu'**
en tant que processus de pulvérisation thermique, on utilise la pulvérisation à l'arc électrique à partir de fils, et les deux matériaux (4, 5) sont alimentés simultanément sous la forme d'un fil.

8. Procédé conforme à la revendication 7,
**caractérisé en ce qu'**
on utilise un fil (8) dont le noyau (9) est réalisé dans le second matériau (5) et l'enveloppe (10) du noyau (9) est réalisée dans le premier matériau (4).

9. Moteur à combustion interne comprenant un dispositif de glissement obtenu par la mise en oeuvre du procédé conforme aux revendications 6 à 8.
